# EUROPEAN PATENT SPECIFICATION

(11) **EP 0 631 913 B1**
(45) Date of publication and mention of the grant of the patent: **08.10.1997**
(21) Application number: 94303916.4
(22) Date of filing: 31.05.1994
(51) Int. Cl.: B60S 1/24

(54) **Opposed wiping type wiper unit**
Gegenläufige Scheibenwischereinheit
Unité d'essuyage avec mouvement en sens inverse

(30) Priority: 30.06.1993 JP 41182/93
(43) Date of publication of application: 04.01.1995
(73) Proprietor: Mitsuba Corporation, Kiryu-shi, Gunma-ken (JP)
(72) Inventor: Hoshino, Takashi, Isesaki-shi, Gunma-ken (JP)
(74) Representative: Smith, Norman Ian

(56) References cited:
- DE-A- 3 644 428
- FR-A- 2 555 531
- GB-A- 2 028 114

## Description

### BACKGROUND OF THE INVENTION

### Field of the Invention

The present invention relates to an opposed wiping type wiper unit for wiping a window of an automobile or the like.

### Description of the Related Art

Such an opposed wiping type wiper unit generally comprises a crank arm which is rotatably driven by a motor, an intermediate link pivotally supported at upper and lower intermediate positions thereof, a connecting rod interposed between the crank arm and the intermediate link so as to convert the rotation of the crank arm into reciprocating oscillation of the intermediate link. In addition, the upper and lower ends of the intermediate link are respectively connected to driving levers of right- and left-hand wiper shafts through driving rods so as to bring about opposed wiping operations of right-hand and left-hand wiper arms. Further, the angular velocity changes of the right- and left-hand wiper arms are set to be asymmetrical so that the wiper blades of the right- and left-hand wiper arms are superposed at a lower reversal position. Namely, in the vicinity of the lower reversal position, the angular velocity of the upper wiper arm (on the driver side) is set to be higher, and the angular velocity of the lower wiper arm (on the passenger side) is set to be lower so that the right- hand and left-hand wiper blades are superposed without interference therebetween.

Previously, when the angular velocity changes of the right-hand and left-hand wiper arms were set to be asymmetrical, however, all factors relating to angular velocity changes, such as the length of the connecting rod, the connecting position of the connecting rod to the intermediate link, the length of the driving rods, the connecting positions of the driving rods to the intermediate link, etc. were variably set. This not only complicates setting but also results in the need to design wiper units according to different setting specifications for different vehicle types and driven positions (right-hand and left-hand specifications). As a result, the parts to be used are changed in accordance with the specifications, and the number of part types is significantly increased, thereby increasing the cost.

When a crank arm 3 and a connecting rod 5 are on a line at both the lower and upper reversal positions, and when both reversal positions A and B are set (uniform distribution setting) to be on this line, the intermediate position C of the crank arm 3 in the forward wiping motion of the wiper and the intermediate position C' in the backward wiping motion are not at symmetrical opposite positions at 180°, but are slightly shifted from the symmetrical positions (at a calculated angle of 167.29°) from the geometrical viewpoint of conversion from rotation into oscillation. For the same reason, the oscillation angle of the driving lever 7 at a position before the reversal (upper reversal) position where the crank arm 3 rotates for 20° in the forward motion is slightly different (a calculated value of 0.91°) from the oscillation angle in the backward motion.

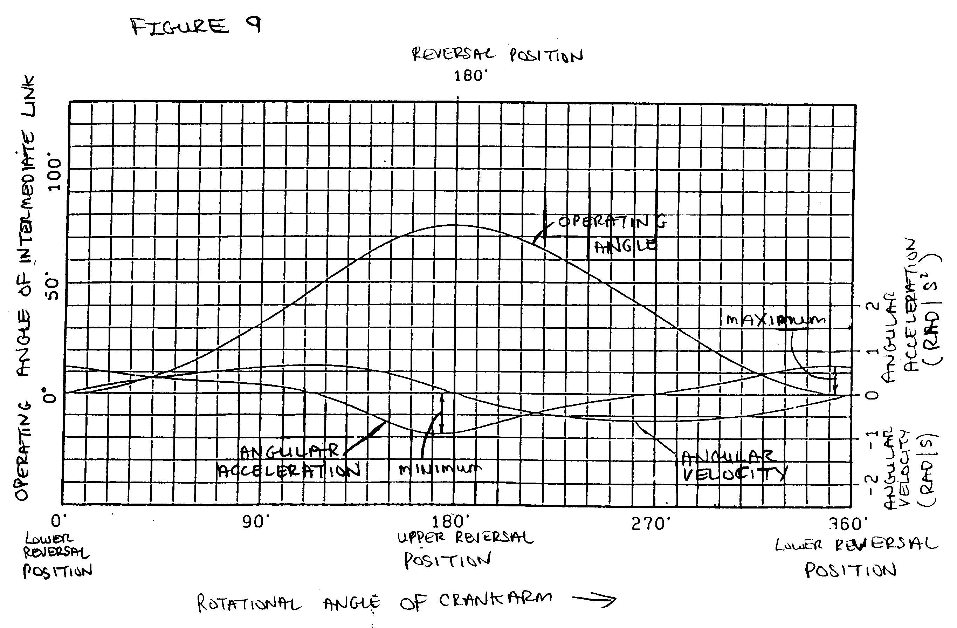

Actual changes in the angular acceleration are described below with reference to Fig. 9 (an embodiment of the present invention employing uniform distribution setting for comparison). The changes in the operating angle show a sine wave with a maximum at the upper reversal position, and the changes in the angular velocity also show a sine wave form which is point-symmetrical about the upper reversal position. On the other hand, the changes in the angular acceleration in the forward and backward wiping motions of the wiper are not symmetrical for the above reason and due to the stress of the pushing and drawing motion of the connecting rod on the driving lever. The angular acceleration becomes a maximum immediately before the upper reversal position and lower reversal position, and the absolute values of both maximum angular accelerations are different.

The velocities of the forward and backward wiping movements of the wiper are thus different from each other. Particularly, in an opposed wiping type wiper unit in which right and left wiper arms are superposed at the center, setting is complicated for the above reasons, and it is difficult to calculate an ideal wiping pattern and produce the wiper unit.

### SUMMARY OF THE INVENTION

The present invention has been achieved in consideration of the above-described actual situation, and an object of the present invention is to provide an opposed wiping type wiper unit which has none of the above problems.

In order to achieve the object, the present invention provides an opposed wiping type wiper unit comprising a crank arm which can be rotatably driven by a motor, an intermediate link pivotally supported by an intermediate link fulcrum, a connecting rod connected between the crank arm and the intermediate link so as to convert rotation of the crank arm into reciprocating oscillation of the intermediate link, the upper and lower ends of the intermediate link being respectively connected to driving levers of right-hand and left-hand wiper shafts through driving rods so as to cause opposed wiping operations of right-hand and left-hand wiper arms, and the angular velocity changes of the right-hand and left-hand wiper arms being set to be symmetrical so that the wiper blades of the right-hand and left-hand wiper arms are superposed at a lower reversal position. In this wiper unit, the length and the connecting position of the connecting rod to the intermediate link are fixedly set so that the angular acceleration change of the intermediate link is substantially symmetrical. On the other hand, the length of the driving rods and the connecting positions thereof to the intermediate link are variably set so that the angular velocity changes of the right- hand and left-hand wiper arms are asymmetrical.

This structure facilitates setting of the opposed wiping type wiper unit in accordance with both right-hand and left-hand specifications, and permits the use of as many parts common to both specifications as possible, thereby permitting an attempt to significanly decrease the cost.

The invention will be described now by way of example only, with particular reference to the accompanying drawings. In the drawings:

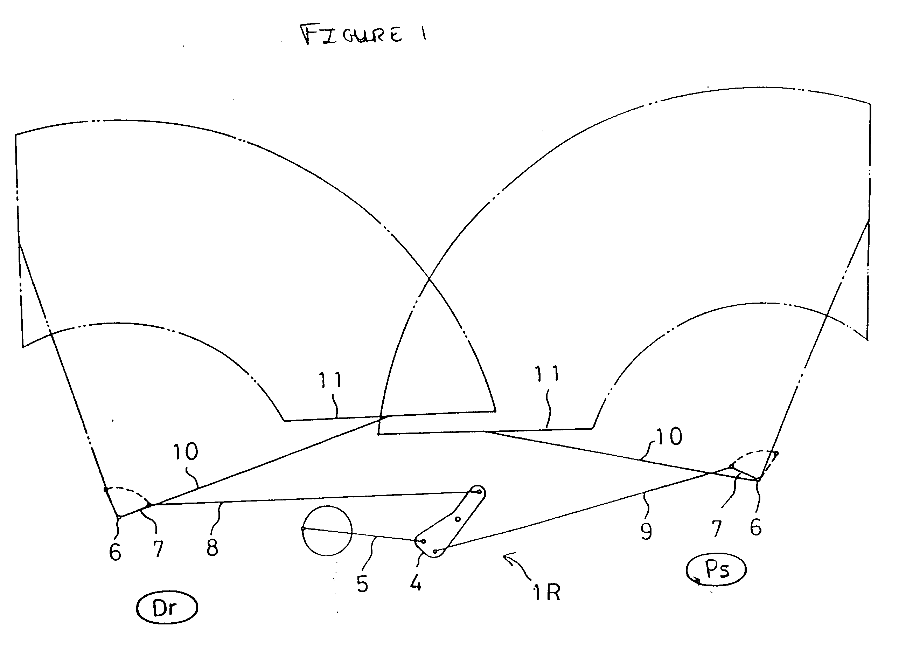

Fig. 1 is a front view illustrating the whole of an opposed wiping type wiper unit in accordance with right-hand specifications;

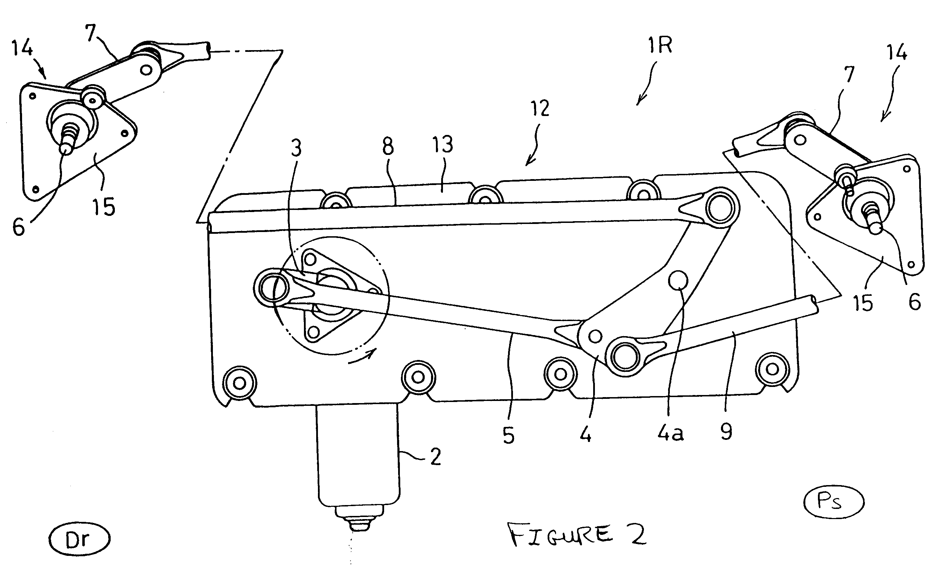

Fig. 2 is a front view illustrating the principal portion of the same wiper unit;
Fig. 3 is a front view illustrating the whole of opposed wiping type wiper unit in accordance with left-hand specifications;

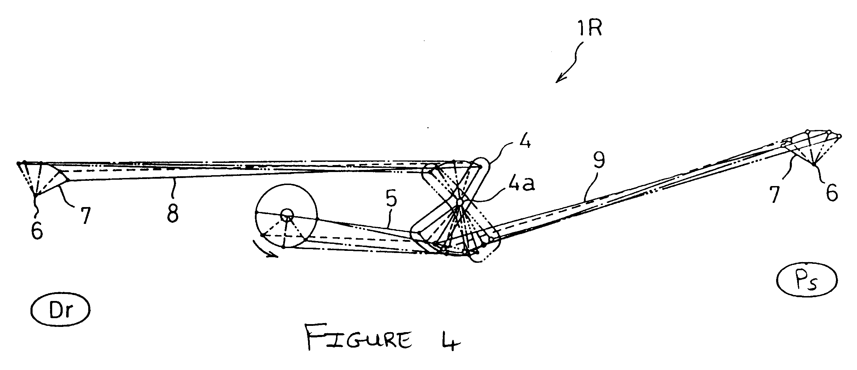

Fig. 4 is a drawing illustrating the operation of the wiper unit in accordance with the right-hand specifications;

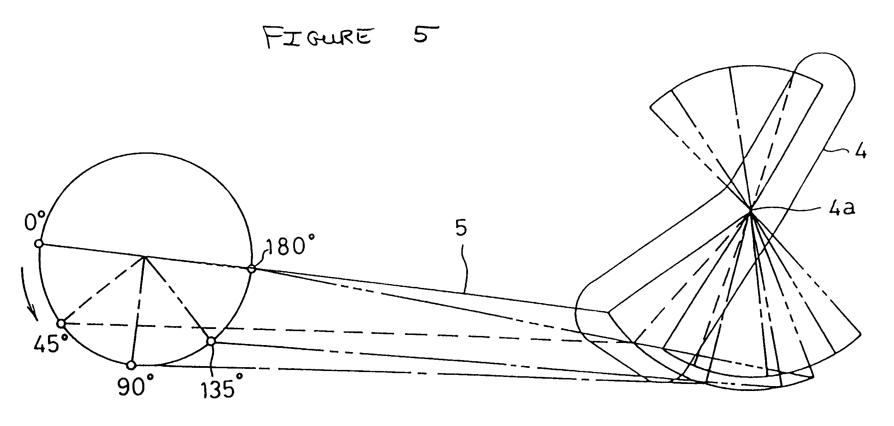

Fig. 5 is an enlarged view illustrating the principal portion of the wiper unit in accordance with the right-hand specifications;

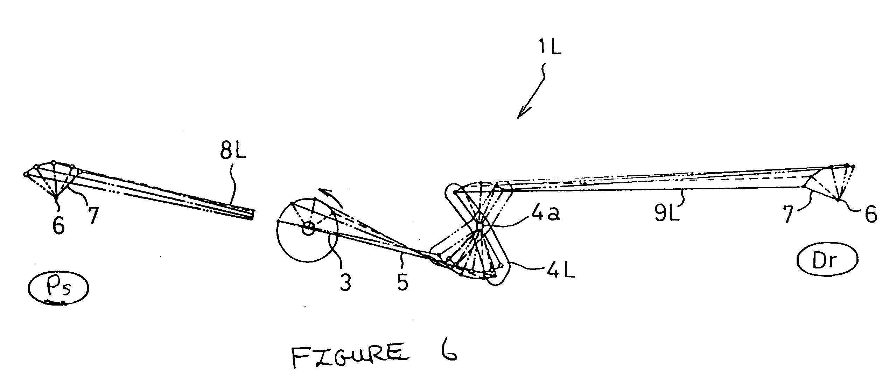

Fig. 6 is a drawing illustrating the operation of the wiper unit in accordance with the left-hand specifications;

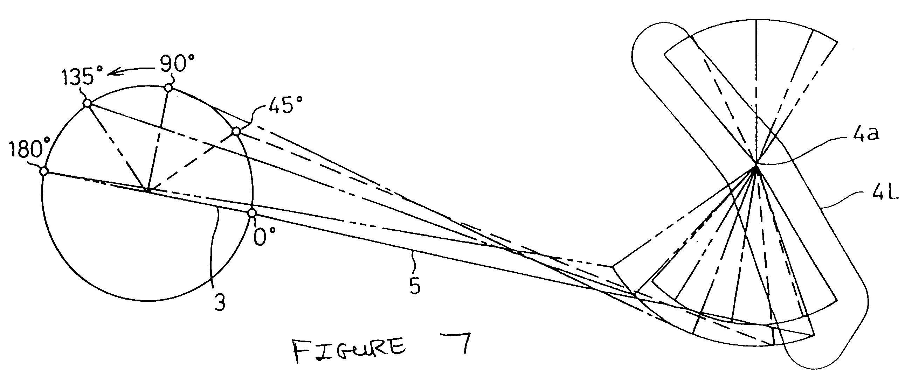

Fig. 7 is an enlarged view illustrating the principal portion of the wiper unit in accordance with left-hand specifications;
Fig. 8 is a graph showing the operating angle, angular velocity and angular acceleration of an intermediate link according to the present invention (uniform setting of angular acceleration);
Fig. 9 is a graph showing the operating angle, angular velocity and angular acceleration of an intermediate link in a conventional example (uniform distribution setting);
Fig. 10 is a graph showing a comparison between the present invention and a conventional example; and
Fig. 11 is a drawing illustrating the operation of a conventional example (a general wiper unit employing uniform distribution setting).

### DESCRIPTION OF THE PREFERRED EMBODIMENTS

An embodiment of the present invention is described below with reference to the drawings. In the drawings, reference numeral 1R denotes an opposed wiping type wiper unit in accordance with right-hand specifications. The wiper unit 1R comprises a motor 2 integrally provided with a reduction mechanism, a crank arm 3 integrally attached to the output shaft of the motor 2 so as to rotate, an intermediate link 4 pivotally supported by intermediate link fulcrum 4a, so as to be oscillatable, a connecting rod 5 connected between the lower end of the intermediate link 4 and the tip of the crank arm 3, right-hand and left-hand wiper shafts 6 disposed on the right-hand and left-hand sides of the intermediate link 4, a right-hand driving rod 8 connected between the driving lever 7 of the right-hand wiper shaft 6 and the upper end of the intermediate link 4, a left-hand driving rod 9 interposed between the driving lever 7 of the left-hand wiper shaft 6 and the lower end of the intermediate link 4, right- and left-hand wiper arms 10 integrally attached to the right- and left-hand wiper shafts 6, respectively, etc. Namely, the rotation of the crank arm 3 with driving of the motor 2 is converted into a reciprocatary oscillation of the intermediate link 4 connected to the crank arm with the connecting rod 5 therebetween. The upper and lower ends of the intermediate link 4 which oscillate from side to side in opposite directions are connected to the driving levers 7 of the right-hand and left-hand wiper shafts 6 through the driving rods 8 and 9, respectively, so as to cause opposite wiping operations of the wiper arms 10 attached to the right- and left-hand wiper shafts 6. However, the angular velocity changes of the right-hand and left-hand wiper arms 10 are set to be asymmetrical in the vicinity of the lower reversal position, as described below, so that the wiper blades 11 are superposed without interference therebetween (the right-hand wiper blade 11 on the driver side Dr is upper, and the left-hand wiper blade 11 on the passenger side Ps is lower) at the lower reversal position.

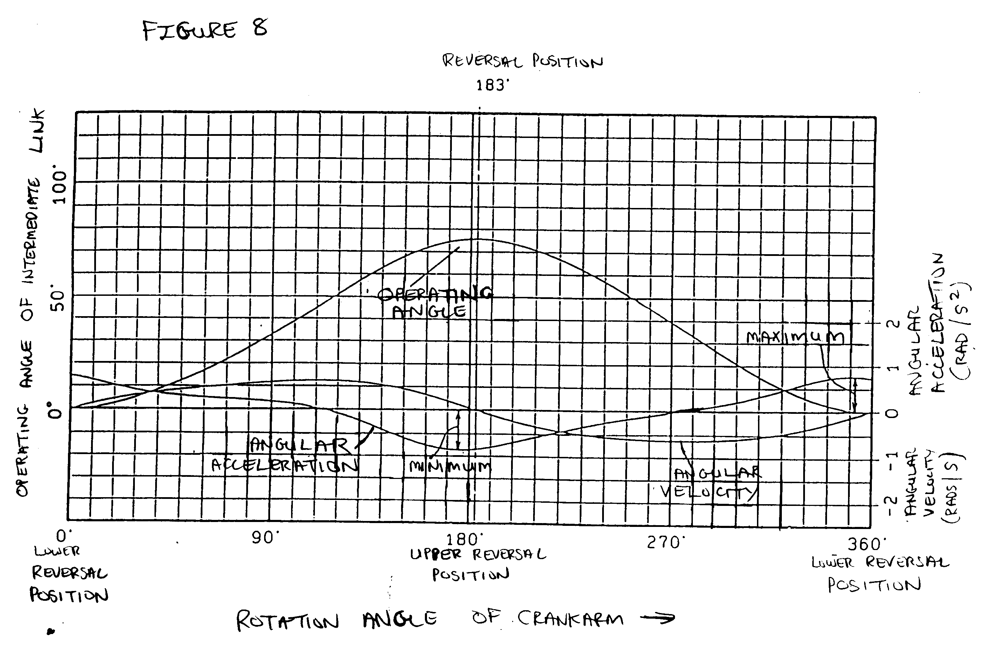

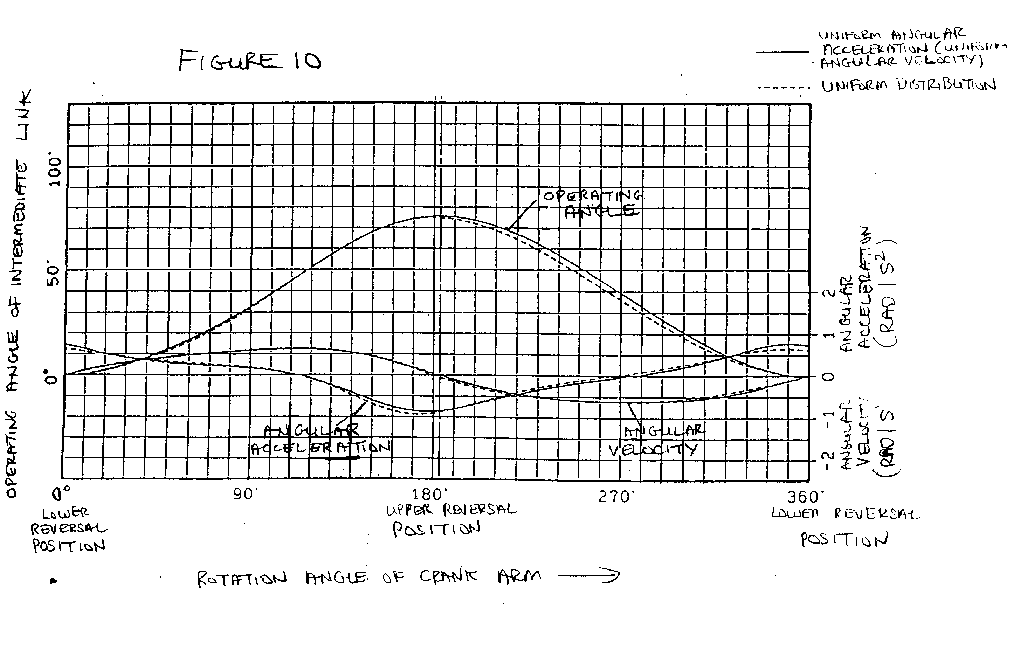

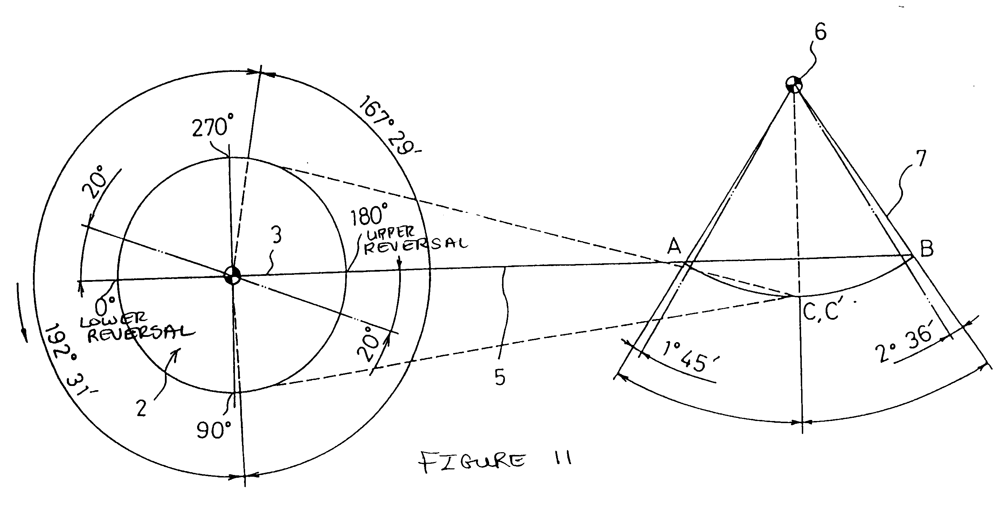

Reference numeral 12 denotes a driving unit comprising a motor bracket 13, the motor 2 and an intermediate link fulcrum 4a, both of which are integrally attached to the motor bracket 13. To the driving unit 12 are also attached the crank arm 3, the connecting rod 5 and the intermediate link 4. The length of the connecting rod 5 and the connecting position (the distance from the link fulcrum, and the phase angle thereto) thereof to the intermediate link 4 are set so that the actual angular acceleration change of the intermediate link 4 is substantially symmetrical. Namely, in the above uniform distribution setting, the angular acceleration of the intermediate link 4 is theoretically asymmetrical, as shown in Fig. 11, and the absolute maximum values of the angular acceleration changes of the intermediate link 4 in the forward and backward wiping motions are different, as shown in Fig. 9. In the present invention, therefore, the difference between the absolute values is corrected, and the actual angular acceleration change of the intermediate link 4 is set to be substantially symmetrical (angular acceleration uniform setting). Fig. 8 is a graph showing the operation of a wiper unit in the case of the angular acceleration uniform setting. Comparison of the operating angle change shown in Fig. 8 with that shown in Fig. 9 shows that the absolute maximum values of the angular acceleration in the forward and backward wiping motions are substantially the same when the upper reversal position is shifted. Fig. 10 is a graph showing comparison between the operations in uniform distribution setting and in angular acceleration uniform setting.

Reference numeral 14 denotes right-hand and left-hand wiper shaft sleeves in each of which the wiper shaft 6 and the driving lever 7 are attached to the wiper shaft bracket 15. The wiper shaft sleeves 14 are disposed on the right-hand and left-hand sides of the driving unit 12 and are connected to the intermediate link 4 through the driving rods 8 and 9, respectively. The length of the driving rods 8 and 9 and the connecting positions (the distance from the link fulcrum and the phase angle thereto) thereof to the intermediate link 4 are set so that the angular velocity changes of the right-hand and left-hand wiper arms 10 are asymmetrical Namely, the angular velocity of the right-hand wiper arm 10 in the vicinity of the lower reversal position is set to be higher than that of the left-hand wiper arm 10 so that the wiper blades 11 of the right-hand and left-hand wiper arms 10 are superposed at the lower reversal position without interference therebetween. However, since the intermediate link 4 is set so that the angular acceleration changes are substantially symmetrical, as described above, the angular velocity changes of the right-hand and left-hand wiper arms 10 are set to be asymmetrical only on the basis of the set length of the driving rods 8 and 9 and the set connecting positions thereof to the intermediate link 4.

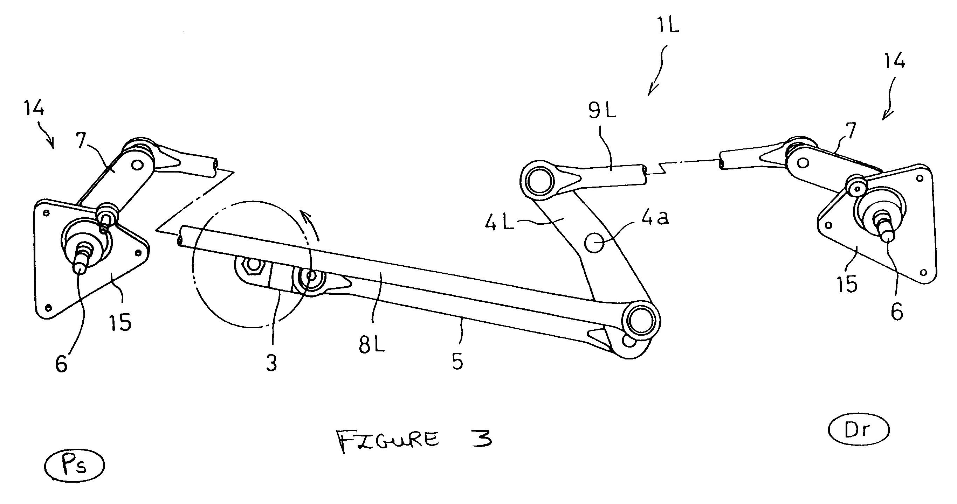

Referring to Figure 3, reference numeral 1L denotes an opposed wiping type wiper unit in accordance with left hand specifications. The wiper unit 1L is different from the wiper unit R1 in accordance with right hand specifications in the points that the positions of the connecting to the right-hand and left-hand driving rods 8 and 9 to the intermediate link 4 are vertically reversed, and that the positions of the right-hand and left-hand wiper arms 10 at the lower reversal position are reversed. However, the motor position, the position of the intermediate link fulcrum (in this embodiment, shifted to the left from the lateral center of the unit) and the positions of the right- and left-wiper shafts are all the same as those in the wiper unit R1. In addition, the driving unit 12, the crank arm 3, the connecting rod 5 and the wiper shaft sleeves 14 according to the right hand specifications are also used for the left hand specifications. Namely, the parts used for the left hand specifications only include the intermediate link 4L and the right-hand and left-hand driving rods 8L and 9L. However, since the connecting position of the connecting rod 5 to the intermediate link 4L is set so that the actual angular acceleration change of the intermediate link 4 is substantially symmetrical, i.e., set at the same position as in the right hand specifications, the angular velocity changes of the right-hand and left-hand wiper arms 10 can be set to be asymmetrical only on the basis of the set length of the driving rods 8L and 9L and the set connecting positions thereof to the intermediate link.

In the embodiment of the present invention configured as described above, since the length and the intermediate link connecting position of the connecting rod 5 for connecting the crank arm 3 which rotates with driving of the motor and the intermediate link 4 which is connected to the right-hand and left-hand wiper shafts through the driving rods 8 and 9 are set so that the actual angular acceleration change of the intermediate link 4 are substantially symmetrical, the angular velocity changes of the right-hand and left-hand wiper arms 10 are set to be asymmetrical on the basis of the set length of the driving rods 8 and 9 and the set connecting positions thereof to the intermediate link.

In the present invention, although the angular velocity changes of the right-hand and left-hand wiper arms 10 are set to be asymmetrical so that the wiper blades 11 of the right-hand and left-hand wiper arms 10 are superposed at the lower reversal position without interference therebetween, the actual angular acceleration change of the intermediate link 4 is set to be substantially symmetrical. The angular velocities of the right-hand and left-hand wiper arms 10 can thus be set in accordance with right-hand or left-hand specifications only by appropriately setting the driving rods 8 and 9 and the connecting positions thereof to the intermediate link 4 even if all factors of angular velocity changes, such as the length of the connecting rod 5, the connecting position of the connecting rod 5 to the intermediate link 4, the length of the driving rods 8 and 9, the connecting positions of the driving rods 8 and 9 to the intermediate link 4, etc. are not set to be variable. This not only facilitates setting the wiper unit according to right-hand or left-hand specifications but also assists in significantly decreasing the cost by using parts such as the crank arm 3, the connecting rod 5, the driving unit 12, the wiper shaft sleeves 14 and so on, which are common to both the right-hand and left-hand specifications.

Further, in this embodiment, since the motor position, the fulcrum position of the intermediate link and the positions of the right-hand and left-hand wiper shafts in the right hand specifications are the same as in the left hand specifications, the installation space for the wiper unit 1 according to each of the right hand and left hand specifications need not to be symmetrical. Thus, not only can the installation space easily he secured but also the problems of increasing the installation space can be avoided.

In brief, in the present invention configured as described above, the rotation of the crank arm with driving of the motor is converted into reciprocatary oscillation of the intermediate link through the connecting rod, and the upper and lower ends of the intermediate link are connected to the driving levers of right-hand and left-hand wiper shafts through the driving rods so as to bring about opposed wiping operations of the right-hand and left-hand wiper arms. However, since the length of the connecting rod and the connecting position thereof to the intermediate link are fixedly set so that the angular acceleration change of the intermediate link is substantially symmetrical, the angular velocity changes of the right-hand and left-hand wiper arms can be set to be asymmetrical only on the basis of the variable set value of the length of the driving rods and the variable set connecting positions of the driving rods to the intermediate link. This causes the wiper blades of the right-hand and left-hand wiper arms to be superposed at the lower reversal position without interference therebetween. Namely, when the angular velocity changes of the right-hand and left-hand wiper arms are set to be asymmetrical, unlike a conventional example, the angular velocity can be set according to either the right-hand or left-hand specifications by by appropriately setting the length of the driving rods and the connecting positions thereof to the intermediate link without variably setting all factors of angular velocity changes, such as the length of the connecting rod, the connecting position of the connecting rod to the intermediate link, the length of the driving rods the connecting positions of the driving rods to the intermediate link and so on. As a result, setting according to both right-hand and left-hand specifications can be simplified significantly.

Further, in order to set the length and intermediate link connecting positions of the driving rods according to the right-hand or left-hand specificatons, it is possible to use parts such as the driving unit to which the motor and the intermediate link oscillation fulcrum are attached, the right-hand and left-hand wiper sleeves to each of which the wiper shaft and the driving lever are attached, and the crank arm, the connecting rod, etc. all of which are common to both specifications. As a result, the number of types of parts can he decreased significantly, and an attempt can be made to significantly decrease the cost.

## Claims

1. An opposed wiping type wiper unit comprising:
a crank arm (3) which can be rotatably driven by a motor (2);
an intermediate link (4,4L) pivotally supported at a fulcrum position (4a) of the intermediate link; and
a connecting rod (5) connected between said crank arm and said intermediate link so as to convert rotation of said crank arm into reciprocating oscillation of said intermediate link;
the upper and lower ends of said intermediate link (4 4L) being connected to driving levers (7) of right-hand and left-hand wiper shafts (6) through right-hand and left-hand driving rods (8, 9 8L, 9L) respectively so as to cause opposed wiping operations of said right-hand and left-hand wiper arms (10), and the angular velocity changes of said right-hand and left-hand wiper arms being set to be asymmetrical so that the wiper blades of said right-hand and left-hand wiper arms are superposed at a lower reversal position;
wherein a length of said connecting rod (5) and a connecting position thereof to said intermediate link (4, 4L) are fixedly set so that the angular acceleration changes of said intermediate link (4, 4L) are substantially symmetrical, and the length of said driving rods (8, 9 8L, 9L) and the connecting positions thereof to said intermediate link (4, 4L) are variably set so that the angular velocity changes of said right-hand and left-hand wiper arms (10) are asymmetrical.

2. An opposed wiping type wiper unit according to claim 1, characterised in that,
said wiper unit can be used in accordance with right hand specifications in which a right-hand wiper blade (11) is superposed on a left-hand wiper blade (11) at said lower reversal position, and left hand specifications in which said left-hand wiper blade (11) is superposed on said right-hand wiper blade (11) at said lower reversal position;
dimensions of a driving unit (12) to which said motor (2) and an intermediate link oscillation fulcrum (4a) are attached, and right-hand and left-hand wiper shaft sleeves (14) to each of which a wiper shaft (6) and a driving lever (7) are attached are substantially identical for both said left-hand and right-hand specifications;
the length of said connecting rod (5) and the connecting position thereof to said intermediate link (4 4L) are set to be the same in both said left-hand and right-hand specifications; and
the length of said driving rods (8, 9 8L, 9L) and the connecting positions thereof to said intermediate link (4 4L) are set in accordance with each of said right-hand and left-hand specifications.

## Patentansprüche

1. Gegenläufige Scheibenwischeranlage mit
einem Kurbelarm (3), der mittels eines Motors (2) antreibbar ist;
einem Zwischenhebel (4,4L) in drehbarer Lagerung in einer Lagerstelle (4a) des Zwischenhebels und
einer Verbindungsstange (5) in Verbindung mit dem Kurbelarm und dem Zwischenhebel so, daß die Drehbewegung des Kurbelarms in eine hin- und hergehende Schwingbewegung des Zwischenhebels umgesetzt wird;
Verbindung von oberen und unteren Enden des Zwischenhebels (4) mit Antriebshebeln (7) von rechts- und linksseitigen Wischerwellen (6) durch rechts- bzw. linksseitige Antriebsstangen (8,9), um entgegengerichtete Wischeroperationen von rechts- und linksseitigen Wischerarmen (10) zu bewirken sowie Winkelgeschwindigkeitsveränderungen von rechts- und linksseitigen Wischerarmen in der Festlegung so, daß sie asymmetrisch sind und die Wischerblätter von rechts- und linksseitigen Wischerarmen in einer unteren Umkehrposition übereinanderliegen;
wobei eine Länge der Verbindungsstange (5) und eine Verbindungsstelle von ihr zum Zwischenhebel (4) so festgelegt sind, daß die Winkelbeschleunigungsveränderungen des Zwischenhebels (4) so festgelegt sind, daß die Winkelbeschleunigungsveränderungen des Zwischenhebels (4) im wesentlichen symmetrisch sind und die Länge der Antriebsstangen (8,9) und ihre Verbindungsstellen zum Zwischenhebel so variabel festgelegt sind, daß die Winkelgeschwindigkeitsveränderungen von rechts- und linksseitigem Wischerarm (10) asymmetrisch sind.

2. Gegenläufige Scheibenwischeranlage nach Anspruch 1, dadurch gekennzeichnet, daß
die Wischeranlage in einer rechtsseitigen Auslegung verwendet werden kann, in der in der unteren Umkehrposition ein rechtsseitiges Wischerblatt (11) über einem linksseitigen Wischerblatt (11) liegt und in einer linksseitigen Auslegung, in der in der unteren Umkehrposition ein linksseitiges Wischerblatt (11) über einem rechtsseitigen Wischerblatt (11) liegt;
die Bemessungen einer Antriebseinheit (12), zu der der Motor (2) und eine Zwischenhebelschwingungslagerstelle (4a) gehören, und rechtsseitige und linksseitige Wischerwellenlagerungen (14), zu denen jeder eine Wischerwelle (6) und ein Antriebshebel (7) gehören, für rechts- und linksseitige Auslegung im wesentlichen identisch sind;
die Länge der Verbindungsstange (5) und die Verbindungsstelle von ihr zum Zwischenhebel (4) für rechtsseitige und linksseitige Auslegung gleich festgelegt sind und
die Länge der Antriebsstangen (8,9) und ihre Verbindungsstellen zum Zwischenhebel (4) für rechtsseitige und linksseitige Auslegung in Übereinstimmung miteinander festgelegt sind.

## Revendications

1. Une unité d'essuie-glace du type à essuyages opposés comprenant :
un bras de manivelle (3) qui peut être entraîné en rotation par un moteur (2) ;
une liaison intermédiaire (4, 4L) portée de manière pivotante au niveau d'une position de pivotement (4a) de la liaison intermédiaire ; et
une biellette (5) reliée entre ledit bras de manivelle et ladite liaison intermédiaire de manière à convertir la rotation dudit bras de manivelle en une oscillation en va-et-vient de ladite liaison intermédiaire ;
les extrémités supérieure et inférieure de ladite liaison intermédiaire (4) étant reliées à des leviers d'entraînement (7) d'arbres d'essuie-glace (6) de main droite et de main gauche, par l'intermédiaire de tiges d'entraînement (8, 9) respectivement de main droite et de main gauche de manière à provoquer des opérations d'essuyage opposées desdits bras d'essuie-glace (10) de main droite et de main gauche, les changements de vitesse angulaire desdits bras d'essuie-glace de main droite et de main gauche étant réglés pour être asymétriques de telle manière que les lames d'essuie-glace desdits bras d'essuie-glace de main droite et de main gauche sont superposées au niveau d'une position d'inversion inférieure ;
dans laquelle une longueur de ladite biellette (5) ainsi qu'une position de raccordement de celle-ci à ladite liaison intermédiaire (4) sont réglées de manière fixe de sorte que les changements d'accélération angulaire de ladite liaison intermédiaire (4) sont sensiblement symétriques, et la longueur desdites tiges d'entraînement (8, 9) ainsi que les positions de raccordement de celles-ci à ladite liaison intermédiaire (4) sont réglées de manière variable de sorte que les changements de vitesse angulaire desdits bras d'essuie-glace (10) de main droite et de main gauche sont asymétriques.

2. Une unité d'essuie-glace du type à essuyages opposés selon la revendication 1, caractérisée en ce que
ladite unité d'essuie-glace peut être utilisée en accord avec des spécifications de main droite dans lesquelles une lame d'essuie-glace de main droite (11) est superposée à une lame d'essuie-glace de main gauche (11) au niveau de ladite position d'inversion inférieure, et en accord avec des spécifications de main gauche dans lesquelles ladite lame d'essuie-glace de main gauche (11) est superposée à ladite lame d'essuie-glace de main droite (11) au niveau de ladite position d'inversion inférieure ;
les dimensions d'une unité d'entraînement (12) à laquelle ledit moteur (2) et un pivot d'oscillation (4a) de la liaison intermédiaire sont fixés, et les manchons (14) de l'arbre d'essuie-glace de main droite et de main gauche à chacun desquels un arbre d'essuie-glace (6) et un levier d'entraînement (7) sont fixés, sont sensiblement identiques à la fois pour lesdites spécifications de main gauche et de main droite ;
la longueur de ladite biellette (5) et la position de raccordement de celle-ci à ladite liaison intermédiaire (4) sont réglées pour être les mêmes à la fois dans lesdites spécifications de main gauche et de main droite ; et
la longueur desdites tiges d'entraînement (8, 9) et les positions de raccordement de celles-ci à ladite liaison intermédiaire (4) sont réglées en accord avec chacune desdites spécifications de main droite et de main gauche.
